(19) Europäisches Patentamt
European Patent Office
Office européen des brevets

(11) **EP 3 438 441 A1**

(12) **EUROPEAN PATENT APPLICATION**
published in accordance with Art. 153(4) EPC

(43) Date of publication:
**06.02.2019 Bulletin 2019/06**

(51) Int Cl.:
*F02M 35/10* (2006.01)    *F02B 27/00* (2006.01)
*F02M 35/104* (2006.01)

(21) Application number: **16897180.2**

(22) Date of filing: **13.09.2016**

(86) International application number:
**PCT/KR2016/010312**

(87) International publication number:
**WO 2017/171159 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 KR 20160038267**

(71) Applicants:
• **Yoo, Bueng Nam**
  **Cheonan-si, Chungcheongnam-do 31207 (KR)**

• **Lee, Ho Sub**
  **Incheon 21089 (KR)**

(72) Inventors:
• **Yoo, Bueng Nam**
  **Cheonan-si, Chungcheongnam-do 31207 (KR)**
• **Lee, Ho Sub**
  **Incheon 21089 (KR)**

(74) Representative: **BRP Renaud & Partner mbB**
  **Rechtsanwälte Patentanwälte**
  **Steuerberater**
  **Königstraße 28**
  **70173 Stuttgart (DE)**

(54) **FLUID ACCELERATOR FOR INTERNAL COMBUSTION ENGINE**

(57)    Disclosed is a fluid accelerator provided on a fluid flow path so as to improve the fluid flow velocity. To this end, provided is a fluid accelerator comprising: a body formed in a cylindrical structure so as to be provided on a fluid flow path; a center hole forming a venturi passage in the vertical direction in the center of the body and having a helical guide groove provided on the inner circumferential surface of the venturi passage; and a plurality of middle holes formed in the vertical direction of the body along the edge of the center hole around the center hole. The fluid accelerator of the present invention can be easily provided in conventional device using fluid, thereby improving the fluid velocity.

FIG. 2

EP 3 438 441 A1

## Description

[Technical Field]

The present invention relates to a fluid accelerator for an internal combustion engine, the fluid accelerator being mounted in a passage of intake air supplied to an engine of the internal combustion engine, and more particularly, to a fluid accelerator for an internal combustion engine, the fluid accelerator having a Venturi structure to increase the velocity of air passing therethrough.

[Background Art]

Generally, in a four-stroke operation of an internal combustion engine, intake, compression, combustion, and exhaust sequentially occur to generate power.

A source of the engine power is thermal energy generated in a combustor of each cylinder. In this case, the combustor is located at a head portion of the engine and instantaneously combusts fuel particles sealed therein, using air to obtain power. To increase the power, more fuel should combust to increase energy generated per unit time. In this case, much more intake air is required.

However, an increase in fuel supply is not sufficient and various ambient conditions should be satisfied to firmly obtain high efficiency.

The increase in engine power is directly proportional to the amount of air used. To increase the amount of the intake air, a capacity of each cylinder is increased, the flow of the air is accelerated, or the number of cylinders is increased. In this case, an intake device serves as a passage for supplying necessary air to the combustor and is a significant device capable of increasing durability of the engine.

During the four-stroke operation of the engine, various complicated stages of intake pressure and exhaust pressure, which serve as resistances to air flow, occur from an inlet through which the air initially flows into an outlet through which the air is ultimately discharged.

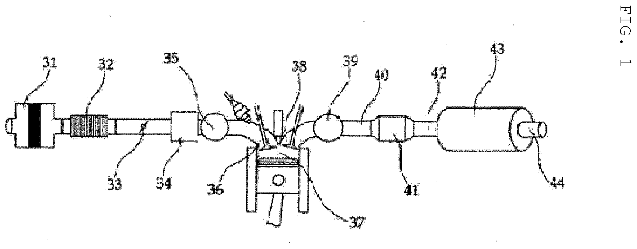

As illustrated in FIG. 1, a passage from the inlet to the outlet sequentially passes through an intake filter 31, an intake 32, a throttle body 33, a surge tank 34, an intake manifold 35, a head (an intake port 36), a combustor 37 in a cylinder, a head (exhaust port 38), an exhaust manifold 39, an exhaust pipe 40, a catalytic device 41, an intermediate pipe 42, a main muffler 43, and a tail pipe 44. Herein, the intake 32 refers to a duct for connecting the intake filter 31 and the throttle body 33.

Roughly, with respect to the combustor 37, intake pressure occurs in an intake end and exhaust pressure occurs in an exhaust end as resistances to air flow.

The intake/exhaust system has a valve overlap period, in which an intake valve and an exhaust valve are simultaneously open, to increase air supply efficiency by using inertia of air flow.

The overlap repeatedly occurs several tens of times to more than a hundred and several tens of times per second depending on engine speed, and a sealing function of the intake valve can be lost, thereby causing backfiring in the valve overlap period. If the valve overlap period is not provided to prevent the above problem, inertia of the air is not usable, a significant mechanical load of air pressure is applied to vertical reciprocating motion of a piston, and thus excessively low efficiency is achieved. As such, the valve overlap period must be included.

An intake pulse is generated when pressure is applied to air entering due to inertial force during intake operation, based on closing of the intake valve to generate reverse flow and impacts newly entering air to disturb entrance of external air. The pulse influences an inlet of a throttle body or to an intake filter (or an inlet of an air cleaner) and such intake disturbance serves as a cause of reduction in engine power.

To solve the above problems, a variety of conventional technologies have been proposed. In general, tornado, cyclone, jet valve, turbocharger, supercharger, and intercooler devices, and a camshaft for obtaining a variable inertia effect in a valve overlap period are known.

The above technologies use a means for inducing efficient flow of intake air by using inertia and a device for applying pressure to forcibly make the air flow, but do not easily achieve desired effects. In addition, since complementary devices are required, for example, when the air is supplied at a high density, a cooler for cooling the high-density air is required, structures are very complicated and manufacturing costs are increased.

[Disclosure]

[Technical Problem]

Therefore, the present invention has been made in view of the above problems, and it is one object of the present invention to provide a fluid accelerator for an internal combustion engine, the fluid accelerator mounted in a passage of air corresponding to a fluid flowing into the internal combustion engine, and being capable of increasing the velocity of the intake fluid, forming a vortex, and controlling the flow of the fluid to minimize friction between the vortex of the fluid and an external wall of the passage.

[Technical Solution]

In accordance with one aspect of the present invention, provided is a fluid accelerator including a body provided in a cylindrical structure so as to be mounted on a passage of a fluid, a center hole forming a Venturi passage in a vertical direction at a center of the body, and comprising spiral guide grooves on an inner circumferential surface of the Venturi passage, and a plurality of middle holes provided around the center hole along an edge of the center hole in the vertical direction of the body.

[Advantageous effects]

A fluid accelerator according to the present invention may be easily mounted in an existing device using a fluid, to increase the velocity of the fluid.

When the fluid accelerator according to the present invention is mounted in a passage of air supplied to an internal combustion engine, moisture of intake air may be removed and the velocity thereof may be increased due to a Venturi structure and other geometric passage structures, thereby increasing the efficiency of mixing fuel with air. Therefore, a ratio of supplying the air into a cylinder may be improved to save fuel and to increase combustion performance of the engine.

In addition, by forming a vortex of the flow of the air supplied to the internal combustion engine using fuel such as gasoline, diesel, or liquefied petroleum gas (LPG), the fuel may be appropriately mixed with the air by the vortex. As such, since the speed of combustion, explosion, and reaction in a cylinder having a fixed capacity is increased, engine power may be efficiently obtained and air pollution by, for example, an exhaust gas due to incomplete combustion may be reduced.

Furthermore, when the fluid accelerator according to the present invention is used in an intake (or an intake duct) of the internal combustion engine connected to a vehicle engine, the fluid accelerator serves as a surge tank in the intake irrespective of high-speed or low-speed driving of the vehicle to constantly store the air flowing from outside and then passing through a filter and to supply the air at a uniform pressure when the engine operates. In other words, since the fluid is supplied to the engine at a flow rate related to revolutions of an engine crank depending on high-speed or low-speed driving of the vehicle, the air is not uniformly supplied and thus complete combustion is not enabled due to a high ratio of the fuel and a low ratio of the air.

However, when the fluid accelerator according to the present invention is assembled to a front end of a throttle valve and a rear end of the intake duct, the fluid accelerator serves as a surge tank for storing the fluid, and the fluid is uniformly supplied to the engine when a cylinder head operates.

Furthermore, the fluid accelerator according to the present invention may solve the problem of a surge tank provided at a front end of an intake manifold.

Specifically, the surge tank provided at the front end of the intake manifold may supply a certain amount of air to the intake manifold when the vehicle moves at high speed, but lacks air, and may not supply a certain amount of the air to each line of the intake manifold when the vehicle moves at low speed. On the other hand, when the fluid accelerator of the present invention is assembled into the intake, since the fluid accelerator stores the air together with the surge tank and sends the air to the intake manifold even when the vehicle moves at low speed, the air may be uniformly supplied to the intake manifold irrespective of the speed of the vehicle.

[Description of Drawings]

FIG. 1 is a structural view of a conventional internal combustion engine including an intake/exhaust device, and shows a valve overlap state.
FIG. 2 is a perspective view for describing a fluid accelerator according to the present invention.
FIG. 3 is a rear perspective view for describing the fluid accelerator according to the present invention.
FIGS. 4 and 5 are a cross-sectional view and a partially-cut perspective view for describing the fluid accelerator according to the present invention.
FIG. 6 includes graphs for describing a loss factor based on inlet and outlet shapes.
FIG. 7 is a graph for describing a loss factor based on an interior angle of an extended outlet.
FIG. 8 is a plan view for describing the fluid accelerator according to the present invention.
FIGS. 9 and 10 are schematic views for describing a fluid accelerator mounted in an intake duct.
FIG. 11 is an exploded perspective view for describing another embodiment of the fluid accelerator according to the present invention.
FIG. 12 is a perspective view of the fluid accelerator of FIG. 11.
FIG. 13 is a plan view of the fluid accelerator of FIG. 11.
FIG. 14 is a side view of the fluid accelerator of FIG. 12.
FIG. 15 is a partially-cut perspective view of the fluid accelerator of FIG. 12.
FIG. 16 is a cross-sectional view of the fluid accelerator of FIG. 12.

[Best mode]

A fluid accelerator for an internal combustion engine according to preferred embodiments of the present invention (hereinafter simply referred to as a 'fluid accelerator') will be described in detail with reference to the attached drawings.

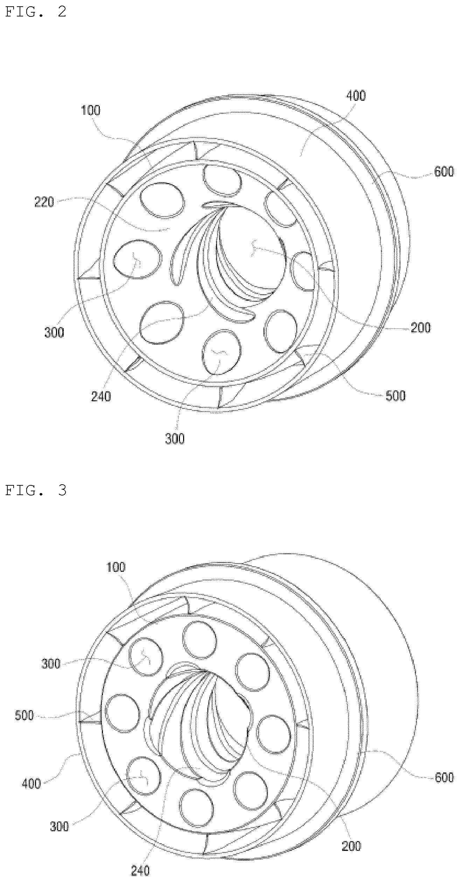

FIG. 2 is a perspective view for describing a fluid accelerator according to the present invention, and FIG. 3 is a rear perspective view for describing the fluid accelerator according to the present invention.

Referring to FIGS. 2 and 3, the fluid accelerator according to the present invention may include a body 100 provided in a cylindrical structure, a center hole 200 provided in the center of the body 100, and a plurality of middle holes 300 provided in the body 100 around the center hole 200, and may optionally further include a cover 400 surrounding an outer circumferential surface of the body 100, and support plates 500 for connecting the body 100 and the cover 400.

The fluid accelerator is mounted in an internal combustion engine of, for example, a vehicle using a fluid such as air or fuel, and serves to increase the velocity of a fluid flowing through a passage of the internal combustion engine. In addition to the internal combustion engine of a vehicle, the fluid accelerator may also be used in various types of machines or equipment (e.g., vacuum cleaners) which are required to increase the velocity of a fluid.

Each element will now be described in detail with reference to the drawings.

Referring to FIGS. 2 and 3, the fluid accelerator according to the present invention includes the body 100.

The body 100 is provided in a cylindrical structure so as to be mounted on a passage of a fluid. When used in an engine, the body 100 may be selectively coupled between a cylinder head and an intake manifold, an inlet of the intake manifold (before a surge tank), a rear end of an intake duct (or an intake) between an intake filter and the intake manifold, or a position immediately after the intake filter based on the structure of the engine. Herein, the intake refers to a duct for connecting the intake filter and a throttle body.

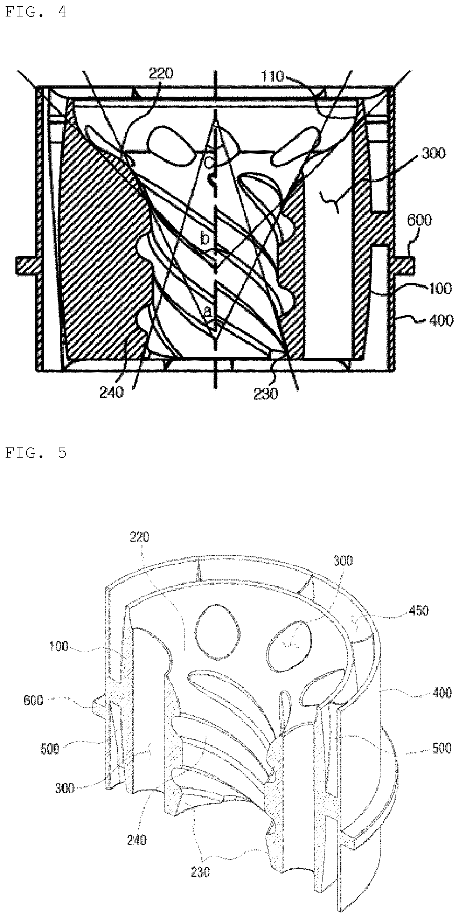

FIGS. 4 and 5 are a cross-sectional view and a partially-cut perspective view for describing the fluid accelerator according to the present invention.

Referring to FIG. 4, an inlet recess 110 may be provided at an upper portion of the body 100, through which the fluid flows in. The inlet recess 110 is provided in a gently curved shape in such a manner that the fluid passing through the body 100 appropriately flows into the center hole 200 and the middle holes 300. The inlet recess 110 serves to reduce resistance occurring when the fluid passing through the body 100 contacts the upper portion of the body 100.

To this end, the inlet recess 110 has a curved surface having an interior angle b of 30 to 60 with respect to the body 100. Specifically, for example, the inlet recess 110 according to the present invention has a curved surface having an interior angle of 60 at a front end thereof, a curved surface having a gradually reduced interior angle at a middle portion thereof, and a curved surface having an interior angle of 30 at a rear end thereof. Herein, the interior angle b indicates twice an interior angle formed between a center axis of the body 100 and a tangent to the curved surface provided at the inlet recess 110.

The inlet recess 110 includes inlets of the plurality of middle holes 300 and is connected to an inlet of the center hole 200.

Preferably, a bottom surface, i.e., a rear end, of the body 100 is flat or round as illustrated in FIG. 3.

In addition, preferably, a vertical cross-section of the outer circumferential surface of the body 100 has a streamlined shape as illustrated in FIGS. 4 and 5 so as to minimize air resistance. To this end, the body 100 has a center portion with an outer diameter longer than that of a upper portion and a lower portion.. As such, resistance by the fluid flowing in a vortex through side holes 450 formed by the cover 400 and the support plates 500 is reduced by providing the streamlined structure in which inlets and outlets of the side holes 450 are wide and passages for connecting the inlets and the outlets are narrower than the inlets and the outlets.

Referring to FIGS. 2 and 3, the fluid accelerator according to the present invention includes the center hole 200.

The center hole 200 forms a Venturi passage in a vertical direction at the center of the body 100, and includes spiral guide grooves 240 on an inner circumferential surface of the Venturi passage. The center hole 200 serves not only to increase the velocity of the fluid passing through the Venturi passage but also to rotate the fluid. Herein, the Venturi passage is a passage in which two end portions have large cross-sectional areas and are gradually narrowed toward a center portion. When the air flows through the Venturi passage, the air is rapidly discharged due to a pressure difference between the portions having large cross-sectional areas and the portion having a small cross-sectional area. Such a variation in fluid velocity is described based on Bernoulli's theorem.

In other words, the air flowing into the center hole 200 flows very fast through the Venturi passage due to a change in the pressure of the air by the Venturi passage and, at the same time, is rotated by the spiral guide grooves 240 provided in the internal wall of the center hole 200.

Specifically, a first inclined surface 220 having an interior angle a of 30 to 60 at the inlet into which the fluid flows. Herein, the interior angle a indicates twice an interior angle formed between the center axis of the body 100 and a tangent to the curved surface provided at the inlet of the center hole 200.

In this case, since a flow separation zone is increased and thus loss is also increased when the inlet of the center hole 200 is sharp-edged or protrudes, preferably, the first inclined surface 220 of the inlet is provided as a curved surface.

To reduce frictional resistance to the fluid of an outlet of the center hole 200, the outlet has a second inclined surface 230 having an interior angle less than 50% (preferably, 15 to 50%) of the interior angle a of the inlet. In other words, when the curved surfaces are provided at the inlet and the outlet of the center hole 200, wake resistance and friction are reduced.

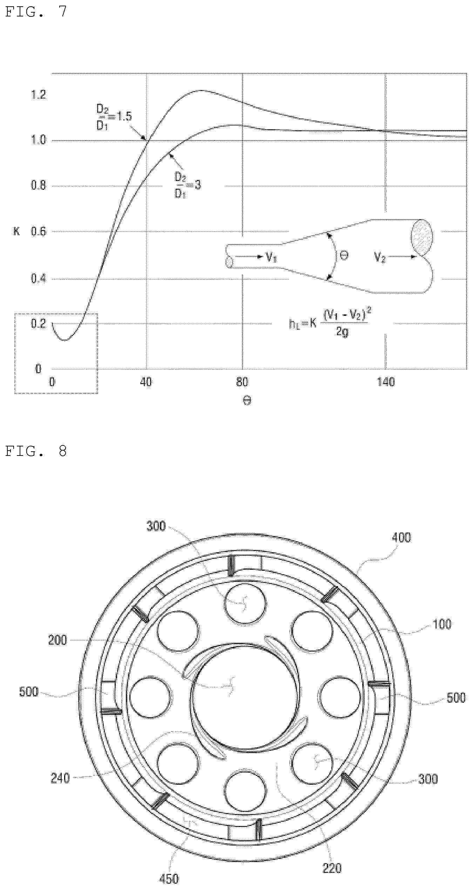

For example, when the first inclined surface 220 having an interior angle of 50 is provided at the inlet of the center hole 200, preferably, the second inclined surface 230 having an interior angle of 7.5 to 25 is provided at the outlet of the center hole 200. Otherwise, when the first inclined surface 220 having an interior angle of 30 is provided at the inlet of the center hole 200, preferably, the second inclined surface 230 having an interior angle of 4.5 to 15 is provided at the outlet of the center hole 200. In this case, frictional resistance is minimized as will be shown in FIG. 7.

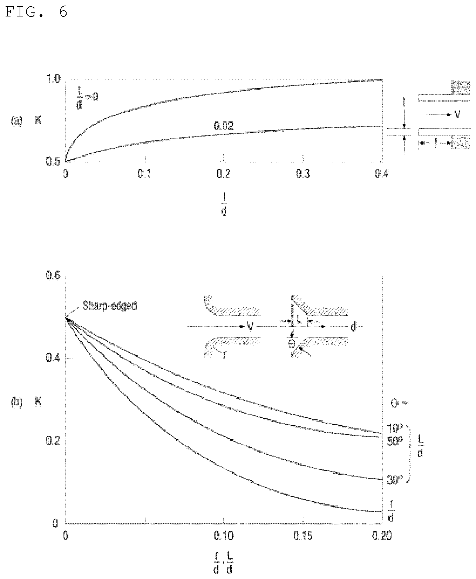

FIG. 6 includes graphs for describing a loss factor based on inlet and outlet shapes (Fluid mechanics. 7/E, Author: Frank M. White, Publisher: McGraw-Hill, Feb. 24, 2012).

When an inlet protrudes as shown in FIG. 6(a) or is sharp-edged as shown in a right cross-sectional view of FIG. 6(b), a flow separation zone is increased and thus loss is also increased. On the other hand, when the inlet is provided as a curved surface as shown in a left cross-sectional view of FIG. 6(b), the flow of the fluid is aided and loss is reduced. In this case, K marked in FIG. 6 indicates a loss factor, t indicates the thickness of a pipe, d indicates the diameter of the pipe, 1 indicates a length by which the pipe protrudes, L indicates the length of an inclined corner, and r indicates a curvature radius of a round portion.

FIG. 7 is a graph for describing a loss factor based on an interior angle of an extended outlet (Fluid mechanics. 7/E, Author: Frank M. White, Publisher: Mc-Graw-Hill, Feb. 24, 2012). As shown in FIG. 7, when an outlet through which a fluid is discharged is extended, the loss factor K has a minimum value of about 0.16 at an interior angle of about 7. In this case, D1 indicates the diameter of an entrance, D2 indicates the diameter of an exit, V1 indicates the velocity at the entrance, V2 indicates the velocity at the exit, g indicates the acceleration of gravity, and hL indicates the amount of loss (head loss).

As described above, the center hole 200 greatly increases the amount of the air supplied to an engine, changes the flow of the air to the form of a vortex due to operation of the spiral guide grooves 240, and significantly increases the velocity of the air flowing into the engine as will be described below.

Therefore, the center hole 200 increases an intake velocity of the air to finely split moisture particles in the air, which serve as a cause of incomplete combustion, appropriately mixes the fuel with the air due to a vortex form of the air flow, and increases an air compression ratio, compression heat, and an ignition point in the engine and reduces an air/fuel ratio to completely combust the fuel by supplying a large amount of the air to the engine. As such, environmental pollution due to an exhaust gas is prevented, fuel is saved, and engine power is increased.

Referring to FIGS. 2 and 3, the fluid accelerator according to the present invention includes the middle holes 300.

The middle holes 300 are provided around the center hole 200 along the edge of the center hole 200 in a vertical direction of the body 100, and the air having passed through the middle holes 300 flows linearly.

The linear flow of the air prevents the vortex formed along the spiral guide grooves 240 of the center hole 200 and having passed through a rear end of the center hole 200, from dissipating after hitting the wall of the passage or the air having passed through the side holes 450, and guides the air having passed through the center hole 200 and the side holes 450, to be supplied to the engine while maintaining the form of a vortex.

Herein, preferably, a sum of cross-sectional areas of the plurality of middle holes 300 is 1.1 to 1.5 times a minimum cross-sectional area of the center hole 200. A flow rate of the fluid passing through the middle holes 300 serves to complement a variation in the velocity of the fluid passing through the center hole 200 depending on the velocity and pressure of the fluid at a front end of the center hole 200. When a vortex of the fluid flowing through the center hole 200 occurs at the rear end of the center hole 200, the fluid passing through the middle holes 300 serves as an air curtain to prevent a reduction in the velocity of the fluid having passed through the center hole 200.

Furthermore, when the fluid flows into the fluid accelerator at low speed, the middle holes 300 serve to complement lack in amount of the fluid passing through the spiral guide grooves 240 of the center hole 200 per unit time. In other words, since the middle holes 300 have paths of the fluid shorter than that of the center hole 200 and thus the fluid flowing in at low speed is passed through the middle holes 300 faster than through the center hole 200, the middle holes 300 serve to stably supply the fluid even when a high pressure is not applied.

The number of the middle holes 300 is changed in accordance with the size of the fluid accelerator and this is not limited to any particular number. However, preferably, three to ten middle holes 300 are provided in the body 100.

Referring to FIGS. 2 and 3, the fluid accelerator according to the present invention includes the cover 400.

The cover 400 is spaced apart from and surrounds the outer circumferential surface of the body 100. As illustrated in FIG. 8, the cover 400 forms the side holes 450 outside the middle holes 300, together with the support plates 500.

The side holes 450 make the fluid flow along an inner circumferential surface of a pipe for providing a fluid passage, e.g., an intake, to prevent the fluid, having passed through the center hole 200 and the middle holes 300, from hitting the inner circumferential surface of the pipe. In other words, the side holes 450 reduce frictional resistance occurring between the fluid, having passed through the center hole 200 and the middle holes 300, and the pipe, by providing an air curtain effect against the inner circumferential surface of the pipe.

To make the fluid appropriately flow into the side holes 450, preferably, the cover 400 has a length equal to or greater than that of the body 100.

Furthermore, when the outer circumferential surface of the body 100 has a streamlined structure in a vertical direction as illustrated in FIGS. 4 and 5, preferably, the cover 400 has a uniform inner diameter in such a manner that the inlets and the outlets of the side holes 450 are wide and the passages for connecting the inlets and the outlets are narrower than the inlets and the outlets. Due to the above-described structure, the velocity of the air passing through the side holes 450 is increased.

Referring to FIGS. 2 and 3, the fluid accelerator according to the present invention includes the support plates 500.

The support plates 500 are provided between the body 100 and the cover 400 in a vertical direction of the body 100 in such a manner that the cover 400 is fixed to the body 100. As illustrated in FIG. 8, the support plates 500 form the side holes 450 outside the middle holes 300, together with the cover 400.

Preferably, the support plates 500 are provided in a vertical direction of the body 100 on the outer circumferential surface the body 100 in twisted or inclined curve shapes in such a manner that fluid flowing into the side holes 450 provided between the cover 400 and the body 100 is discharged while rotating to form a vortex. In this case, the support plates 500 reduce resistance applied to the fluid flowing into the side holes 450 by forming a vortex of the fluid flowing into the side holes 450.

Referring to FIGS. 2 and 3, the fluid accelerator according to the present invention includes a ring flange 600.

The ring flange 600 is provided along an outer circumferential surface of the cover 400. The ring flange 600 provides a space in which a vermiculite ring 700 to be described below is mounted on the outer circumferential surface of the cover 400. To this end, preferably, the ring flange 600 is provided at the center of the cover 400.

Herein, when the above-described fluid accelerator according to the present invention is used, an increase in the velocity of air between an inlet and an outlet is calculated using the Bernoulli equation as described below. For example, when an outer diameter A1 of the fluid accelerator of the present invention is 70, a velocity V1 of the fluid is 6, an inner diameter of a rear end of the center hole 200 is 22, an inner diameter of each of eight middle holes 300 is 8.5, an inner diameter of the cover 400 is 68, a thickness of the side holes 450 is 3.5, and a width of the support plates 500 is 1, Equation 1 relating to a total cross-sectional area A2 of the outlet of the fluid accelerator and a velocity V2 of the fluid passing through the outlet is as shown below.

[Equation 1]

$$A1 \times V1 = A2 \times V2$$

$$A1 = \pi/4 \times (70)^2 = 3846.5$$

$$V1 = 6\text{m/s}$$

$$A2 = \pi/4(22)^2 + 8 \times \pi/4 \times (8.5)^2 +$$

$$\{\pi \times (34)^2 - \pi \times (34-3.5)^2 - 8 \times 1 \times 3.5\} = 1514.52$$

$$V2 = 3846.5/1514.52 \times 6\text{m/s} = 15.24\text{m/s}$$

Otherwise, when the other conditions are the same and the inner diameter of the rear end of the center hole 200 is 26, Equation 2 relating to the total cross-sectional area A2 of the outlet of the fluid accelerator and the velocity V2 of the fluid passing through the outlet is as shown below.

[Equation 2]

$$A1 \times V1 = A3 \times V3$$

$$A3 = \pi/4 \times (26)^2 + 8 \times \pi/4 \times (8.5)^2 +$$

$$\{\pi \times (34)^2 - \pi \times (34-3.5)^2 - 8 \times 1 \times 3.5\} = 1665.24$$

$$V3 = 3846.5/1665.24 \times 6\text{m/s} = 13.86\text{m/s}$$

As shown above, assuming that the velocity of the fluid flowing into a front end of the fluid accelerator is 6, when the inner diameter of the center hole 200 is 22, the velocity of the fluid passing through the fluid accelerator is increased by 2.54 times and, when the inner diameter of the center hole 200 is 26, the velocity of the fluid passing through the fluid accelerator is increased by 2.31 times. In this case, the above equations do not include pressure/friction coefficient/viscosity of the fluid at the front end of the fluid accelerator, and the velocity of the fluid may be changed in accordance with the pressure, friction coefficient, viscosity, or the like.

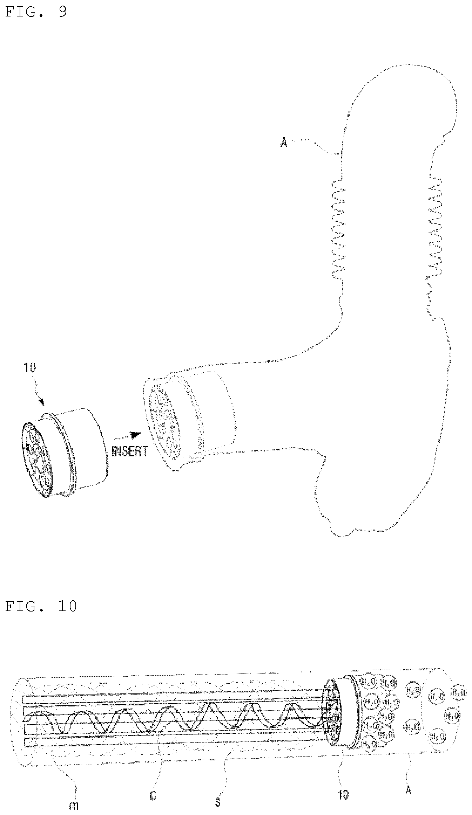

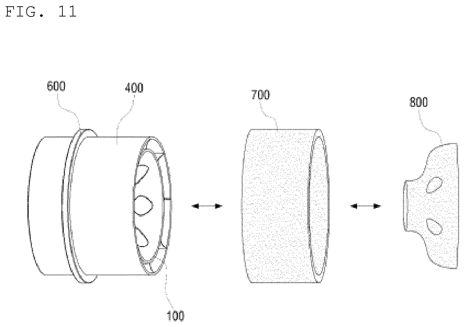

FIGS. 9 and 10 are schematic views for describing a fluid accelerator mounted in an intake duct, and FIG. 11 is an exploded perspective view for describing another embodiment of the fluid accelerator according to the present invention.

Referring to FIGS. 9 to 11, the fluid accelerator according to the present invention may further include a vermiculite ring 700, a vermiculite cap 800, or both.

The vermiculite ring 700 or the vermiculite cap 800 may be included in the fluid accelerator mounted in an internal combustion engine through which intake air moves.

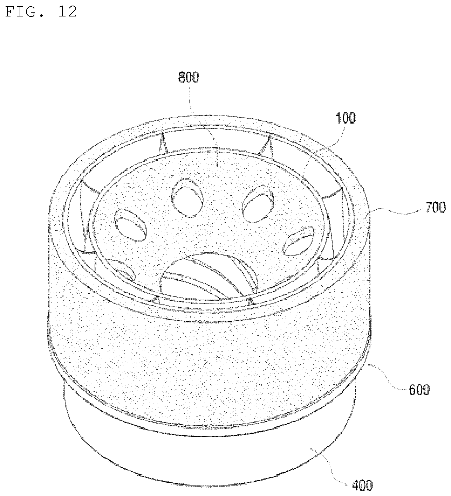

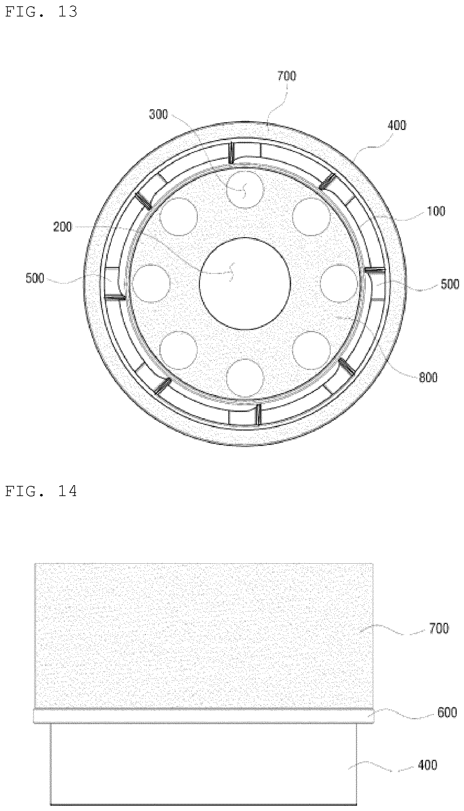

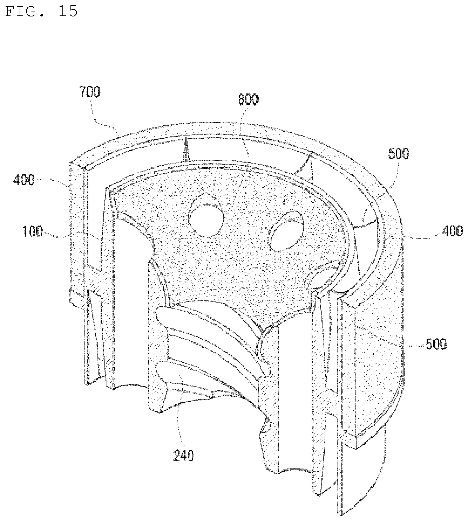

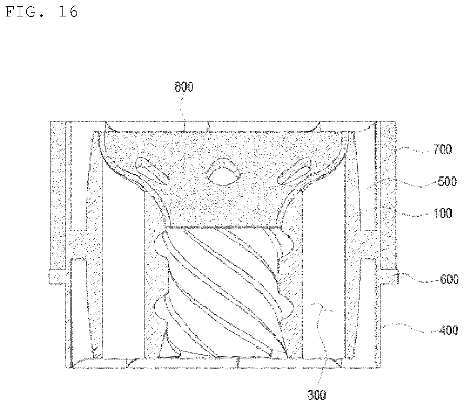

FIG. 12 is a perspective view of the fluid accelerator of FIG. 11, FIG. 13 is a plan view of the fluid accelerator of FIG. 11, FIG. 14 is a side view of the fluid accelerator of FIG. 12, FIG. 15 is a partially-cut perspective view of the fluid accelerator of FIG. 12, and FIG. 16 is a cross-sectional view of the fluid accelerator of FIG. 12.

Referring to FIGS. 9 to 16, the vermiculite ring 700 is mounted at the ring flange 600, is provided on the outer circumferential surface of the cover 400, and is made of vermiculite. The vermiculite ring 700 may have an inner diameter corresponding to an outer diameter of the cover 400 so as to be mounted at the ring flange 600 in contact with the outer circumferential surface of the cover 400. In this case, the vermiculite ring 700 may be produced by heating and compressing vermiculite.

Vermiculite is a monoclinic clay mineral, has chemical components of CMg, Fe3+, and Al3(Al, Si)4O10(OH)24H2O, and is a clay mineral made of aluminum magnesium iron silicate hydroxide. Furthermore, vermiculite has a consistency of 12, has a specific gravity of 2.76, is light gray or brown, and is pearly. In addition, vermiculite is easily decomposed by acid, has a high cation exchange capacity, expands when heated, is porous, and has high moisture absorbency.

The vermiculite ring 700 fitted to the outer circumferential surface of the cover 400 and inserted into the intake duct expands to an outer diameter greater than an initial outer diameter, by absorbing moisture included in the intake air flowing into the inlet of the fluid accelerator, and thus serves to firmly couple the fluid accelerator to the intake duct and to provide a sealing effect.

Referring to FIGS. 9 to 16, the vermiculite cap 800 is provided in an upper portion of the body 100 into which the fluid flows, includes penetration holes facing the center hole 200 and the middle holes 300, and is made of vermiculite. The vermiculite cap 800 has an external shape corresponding to the inlet of the center hole 200 so as to closely contact the inlet of the center hole 200.

The vermiculite cap 800 serves to absorb moisture included in the intake air flowing into the inlet of the fluid accelerator so as to reduce the content of moisture included in the fluid passing through the center hole 200, the middle holes 300, and the side holes 450. When moisture of the air mixed with the fuel of the engine is reduced as described above, fuel efficiency is increased and exhaust gas is reduced.

In the above-described fluid accelerator according to the present invention, as illustrated in FIGS. 9 and 10, an upper portion of the fluid accelerator 10 having the vermiculite ring 700 and the vermiculite cap 800 mounted therein is initially inserted into the intake duct A in such a manner that the vermiculite ring 700 and the vermiculite cap 800 appropriately contact the intake air.

As illustrated in FIG. 10, the vermiculite ring 700 and the vermiculite cap 800 absorb moisture included in the intake air passing through the internal combustion engine. In this case, c indicates the fluid having passed through the center hole 200, m indicates the fluid having passed through the middle holes 300, and s indicates the fluid having passed through the side holes 450.

While the present invention has been particularly shown and described with reference to embodiments thereof, it will be understood by one of ordinary skill in the art that various changes in form and details may be made therein without departing from the spirit and scope of the present invention as defined by the following claims.

**Claims**

1. A fluid accelerator comprising:

   a body provided in a cylindrical structure so as to be mounted on a passage of a fluid;
   a center hole forming a Venturi passage in a vertical direction at a center of the body, and having spiral guide grooves on an inner circumferential surface of the Venturi passage; and
   a plurality of middle holes provided around the center hole along an edge of the center hole in the vertical direction of the body.

2. The fluid accelerator according to claim 1,
   wherein the center hole has a first inclined surface having an angle of 30 to 60 at an inlet into which the fluid flows, and
   wherein the center hole has a second inclined surface having an interior angle of 15 to 50% of the inlet at an outlet through which the fluid is discharged.

3. The fluid accelerator according to claim 2, wherein the first inclined surface of the inlet is a curved surface.

4. The fluid accelerator according to claim 1, further comprising:

   a cover spaced apart from and surrounding an outer circumferential surface of the body; and
   support plates provided between the body and the cover in the vertical direction of the body in such a manner that the cover is fixed to the body.

5. The fluid accelerator according to claim 4,
   wherein the body has a center portion with an outer diameter longer than that of a upper portion and a lower portion.

6. The fluid accelerator according to claim 4,
   wherein the support plates are provided in the vertical direction of the body on the outer circumferential surface the body in curve shapes in such a manner that fluid flowing into side holes provided between the cover and the body is discharged while rotating.

7. The fluid accelerator according to claim 4, further comprising:

a ring flange provided along an outer circumferential surface of the cover; and
a vermiculite ring mounted at the ring flange, provided on the outer circumferential surface of the cover, and consisting of vermiculite.

8. The fluid accelerator according to claim 1, further comprising a vermiculite cap provided in an upper portion of the body into which the fluid flows and having penetration holes facing the center hole and the middle holes.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

## INTERNATIONAL SEARCH REPORT

| International application No. |
| --- |
| **PCT/KR2016/010312** |

| A. | CLASSIFICATION OF SUBJECT MATTER |
| --- | --- |

*F02M 35/10(2006.01)i, F02B 27/00(2006.01)i, F02M 35/104(2006.01)i*

According to International Patent Classification (IPC) or to both national classification and IPC

| B. | FIELDS SEARCHED |
| --- | --- |

Minimum documentation searched (classification system followed by classification symbols)

F02M 35/10; F02B 27/00; F02B 29/02; F02M 35/104

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: engine, intake, output, venturi, vermiculite, moisture, and induction

| C. | DOCUMENTS CONSIDERED TO BE RELEVANT | |
| --- | --- | --- |
| Category* | Citation of document, with indication, where appropriate, of the relevant passages | Relevant to claim No. |
| Y | KR 10-1999-0075276 A (I, Yeong Seong) 15 October 1999<br>See page 3, lines 10, 21-22 and figure 1. | 1-6 |
| A | | 7-8 |
| Y | KR 10-2015-0118451 A (PARK, Sang Ho) 22 October 2015<br>See paragraphs [0023], [0025], [0033] and figures 6, 8. | 1-6 |
| Y | KR 10-2015-0118463 A (PARK, Sang Ho) 22 October 2015<br>See paragraphs [0010]-[0014], [0046] and figure 4. | 3 |
| A | KR 10-2001-0112571 A (LEE, Bum Su) 20 December 2001<br>See abstract; claims 1-2; and figure 3. | 1-8 |
| A | US 2014-0338781 A1 (STEERE ENTERPRISES, INC.) 20 November 2014<br>See abstract; paragraphs [0030]-[0031]; and figure 8. | 1-8 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 DECEMBER 2016 (09.12.2016) | **14 DECEMBER 2016 (14.12.2016)** |
| Name and mailing address of the ISA/KR<br>Korean Intellectual Property Office<br>Government Complex-Daejeon, 189 Seonsa-ro, Daejeon 302-701, Republic of Korea | Authorized officer |
| Facsimile No. +82-42-481-8578 | Telephone No. |

Form PCT/ISA/210 (second sheet) (January 2015)

INTERNATIONAL SEARCH REPORT
Information on patent family members

International application No.

**PCT/KR2016/010312**

| Patent document cited in search report | Publication date | Patent family member | Publication date |
|---|---|---|---|
| KR 10-1999-0075276 A | 15/10/1999 | NONE | |
| KR 10-2015-0118451 A | 22/10/2015 | KR 10-1578833 B1 | 23/12/2015 |
| KR 10-2015-0118463 A | 22/10/2015 | KR 10-1578836 B1 | 23/12/2015 |
| KR 10-2001-0112571 A | 20/12/2001 | NONE | |
| US 2014-0338781 A1 | 20/11/2014 | US 9228542 B2 | 05/01/2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANK M. WHITE.** Fluid mechanics. 7/E. Publisher: McGraw-Hill, 24 February 2012